# EUROPÄISCHE PATENTANMELDUNG

(11) **EP 4 636 958 A1**
(43) Veröffentlichungstag der Anmeldung: **22.10.2025**
(21) Anmeldenummer: 25169328.9
(22) Anmeldetag: 09.04.2025
(51) Int. Cl.: H01R 13/11, H01M 50/296, H01R 13/24, H01R 11/05

(54) **WEIBLICHE ANSCHLUSSEINRICHTUNG, BATTERIESYSTEM, ELEKTRISCHER BATTERIEPACK UND ELEKTRISCHES BATTERIEGERÄT**

(30) Priorität: 16.04.2024 DE 102024110612
(71) Anmelder: Andreas Stihl AG & Co. KG, 71336 Waiblingen (DE)
(72) Erfinder: Würschum, Tobias, 71686 Remseck (DE); Hauser, Lukas, 71384 Weinstadt (DE); Sauerteig, Dr. Daniel, 71394 Kernen (DE)
(74) Vertreter: Patentanwälte Ruff, Wilhelm, Beier, Dauster & Partner mbB

(57) **Zusammenfassung**

Die Erfindung betrifft eine weibliche Anschlusseinrichtung (1) zum Aufnehmen einer männlichen Anschlusseinrichtung (51), aufweisend: einen äußeren Kontaktkörper (2), der einen äußeren Rückenbereich (3) und zwei einander gegenüberliegend von dem äußeren Rückenbereich (3) abstehende äußere Federschenkelbereiche (4) aufweist, wobei die äußeren Federschenkelbereiche (4) dazu ausgebildet sind, die männliche Anschlusseinrichtung (51) im Abstand zu dem äußeren Rückenbereich (3) elektrisch zu kontaktieren, wobei der äußere Rückenbereich (3) und die äußeren Federschenkelbereiche (4) gemeinsam einen äußeren Körperabschnitt (5) des äußeren Kontaktkörpers (2) ausbilden, und einen inneren Kontaktkörper (6), der einen inneren Rückenbereich (7) und zwei einander gegenüberliegend von dem inneren Rückenbereich (7) abstehende innere Federschenkelbereiche (8) aufweist, wobei die inneren Federschenkelbereiche (8) dazu ausgebildet sind, die männliche Anschlusseinrichtung (51) im Abstand zu dem inneren Rückenbereich (7) elektrisch zu kontaktieren, wobei der innere Rückenbereich (7) und die inneren Federschenkelbereiche (8) gemeinsam einen inneren Körperabschnitt (9) des inneren Kontaktkörpers (6) ausbilden, wobei der äußere Körperabschnitt (5) und der innere Körperabschnitt (9) derart geschachtelt angeordnet sind, dass sie nicht oder dass sie nur an dem inneren Rückenbereich (7) und an dem äußeren Rückenbereich (3) aneinander angelegt sind.

## Beschreibung

Die Erfindung betrifft eine weibliche Anschlusseinrichtung für ein elektrisches Batteriesystem sowie ein derartiges Batteriesystem. Außerdem betrifft die Erfindung einen elektrischen Batteriepack für ein solches elektrisches Batteriesystem sowie ein elektrisches Batteriegerät für ein derartiges elektrisches Batteriesystem.

Es ist eine Aufgabe der vorliegenden Erfindung, eine weibliche Anschlusseinrichtung für ein elektrisches Batteriesystem, ein derartiges Batteriesystem, einen elektrischen Batteriepack für ein solches elektrisches Batteriesystem und ein elektrisches Batteriegerät für ein derartiges elektrisches Batteriesystem zu schaffen, die jeweils verbesserte Eigenschaften aufweisen. Insbesondere soll eine Stromtragfähigkeit für einen elektrischen Kontakt zwischen der weiblichen Anschlusseinrichtung und einer komplementären männlichen Anschlusseinrichtung erhöht werden, insbesondere indem ein elektrischer Kontaktwiderstand reduziert wird. Insbesondere soll alternativ oder zusätzlich ein Thermikhaushalt in einem die weibliche Anschlusseinrichtung und die männliche Anschlusseinrichtung umfassenden elektrischen Kontaktsystem verbessert werden.

Diese Aufgabe wird gelöst durch die Gegenstände der unabhängigen Patenansprüche. Bevorzugte Ausführungsformen sind Gegenstand der abhängigen Patentansprüche.

Eine erfindungsgemäße weibliche Anschlusseinrichtung kann in einem elektrischen Batteriesystem verwendet werden. Die weibliche Anschlusseinrichtung für das elektrische Batteriesystem ist zum lösbaren und elektrisch verbindenden Aufnehmen einer männlichen Anschlusseinrichtung des Batteriesystems ausgebildet. Die männliche Anschlusseinrichtung kann synonym als Kontaktmesser bezeichnet werden. Die weibliche Anschlusseinrichtung kann eine Anschlussbuchse ausbilden.

Die weibliche Anschlusseinrichtung weist eine Aufnahmerichtung auf, in welcher die männliche Anschlusseinrichtung lösbar unter elektrischer Verbindung mit der weiblichen Anschlusseinrichtung aufnehmbar ist. Die aufgenommene männliche Anschlusseinrichtung kann, insbesondere ausschließlich, entgegen der Aufnahmerichtung von der weiblichen Anschlusseinrichtung entfernt werden.

Die weibliche Anschlusseinrichtung weist einen äußeren Kontaktkörper auf. Der äußere Kontaktkörper hat einen äußeren Rückenbereich und zwei äußere Federschenkelbereiche. Die beiden äußeren Federschenkelbereiche sind einander, insbesondere senkrecht zu der Aufnahmerichtung, gegenüberliegend angeordnet. Die beiden äußeren Federschenkelbereiche stehen einander gegenüberliegend von dem äußeren Rückenbereich ab. Dabei sind die äußeren Federschenkelbereiche dazu ausgebildet, die aufgenommene männliche Anschlusseinrichtung im Abstand zu dem äußeren Rückenbereich elektrisch zu kontaktieren. Wenn die männliche Anschlusseinrichtung mittels der weiblichen Anschlusseinrichtung aufgenommen ist, können die äußeren Federschenkelbereiche die männliche Anschlusseinrichtung also, insbesondere ausschließlich, im Abstand zu dem äußeren Rückenbereich berühren. Der äußere Rückenbereich und die beiden äußeren Federschenkelbereiche bilden gemeinsam einen äußeren Körperabschnitt des äußeren Kontaktkörpers aus.

Die weibliche Anschlusseinrichtung weist zudem einen inneren Kontaktkörper auf. Der innere Kontaktkörper hat einen inneren Rückenbereich und zwei innere Federschenkelbereiche. Die beiden inneren Federschenkelbereiche sind einander, insbesondere senkrecht zu der Aufnahmerichtung, gegenüberliegend angeordnet. Die beiden inneren Federschenkelbereiche stehen einander gegenüberliegend von dem inneren Rückenbereich ab. Insbesondere stehen die äußeren Federschenkelbereiche entgegen der Aufnahmerichtung von dem äußeren Rückenbereich ab. Insbesondere stehen die inneren Federschenkelbereiche entgegen der Aufnahmerichtung von dem inneren Rückenbereich ab. Die inneren Federschenkelbereiche sind dazu ausgebildet, die aufgenommene männliche Anschlusseinrichtung im Abstand zu dem inneren Rückenbereich elektrisch zu kontaktieren. Wenn die männliche Anschlusseinrichtung mittels der weiblichen Anschlusseinrichtung aufgenommen ist, können die inneren Federschenkelbereiche also die männliche Anschlusseinrichtung, insbesondere ausschließlich, im Abstand zu dem inneren Rückenbereich berühren. Der innere Rückenbereich und die beiden inneren Federschenkelbereiche bilden gemeinsam einen inneren Körperabschnitt des inneren Kontaktkörpers aus. Der äußere Körperabschnitt des äußeren Kontaktkörpers und der innere Körperabschnitt des inneren Kontaktkörpers sind geschachtelt angeordnet. Dabei sind der äußere Körperabschnitt und der innere Körperabschnitt geschachtelt angeordnet, entweder so dass sie ausschließlich an dem inneren Rückenbereich und an dem äußeren Rückenbereich aneinander angelegt sind oder so, dass sie nicht aneinander angelegt sind. Außerhalb der Rückenbereiche berühren sich die Körperabschnitte insbesondere jedenfalls nicht.

Vorteilhaft kann mittels der Erfindung eine besonders große Anzahl an elektrischen Kontaktpunkten zwischen der weiblichen Anschlusseinrichtung und der aufgenommenen männlichen Anschlusseinrichtung erreicht werden, was eine Stromtragfähigkeit der lösbaren elektrischen Verbindung zwischen der weiblichen Anschlusseinrichtung und der davon aufgenommenen männlichen Anschlusseinrichtung begünstigt. Zudem kann das Vorsehen von zwei Kontaktkörpern einen Thermikhaushalt in der weiblichen Anschlusseinrichtung, insbesondere in einem die weibliche Anschlusseinrichtung und die männliche Anschlusseinrichtung umfassenden Kontaktsystem des Batteriesystems, begünstigen.

Zweckmäßig weisen der äußere Körperabschnitt und/oder der innere Körperabschnitt jeweils einen C- und/oder U-förmigen Querschnitt auf. Alternativ oder zusätzlich können der äußere Körperabschnitt und/oder der innere Körperabschnitt rinnen- und/oder trogförmig ausgebildet sein.

Zweckmäßig sind beide inneren Federschenkelbereiche senkrecht zu der Rückenlängserstreckungsrichtung und senkrecht zu der Aufnahmerichtung zwischen den äußeren Federschenkelbereichen angeordnet.

Zweckmäßig kann der äußere Körperabschnitt den inneren Körperabschnitt umgeben.

Zweckmäßig weist der innere Kontaktkörper und/oder der äußere Kontaktkörper ein Kontaktkörpermaterial auf oder besteht aus einem solchen Kontaktkörpermaterial. Das Kontaktkörpermaterial kann eine Kupferlegierung sein. Die Kupferlegierung kann wenigstens 99 Masse-% Cu aufweisen. Beispielsweise kann es sich bei der Kupferlegierung um CuSn6 oder um CuCrAgFeTiSi handeln. Alternativ oder zusätzlich kann das Kontaktkörpermaterial mit einer Beschichtung versehen sein. Die Beschichtung kann Zinn aufweisen oder aus Zinn bestehen. Die Beschichtung kann Zinnsilber aufweisen oder aus Zinnsilber bestehen.

In Ausgestaltung der Erfindung definiert einer der inneren Federschenkelbereiche gemeinsam mit einem, insbesondere nächstgelegenen und/oder benachbarten, der äußeren Federschenkelbereiche je einen Spalt der weiblichen Anschlusseinrichtung. Der Spalt ist insbesondere leer. Insbesondere misst jeder Spalt, insbesondere wenigstens in einem parallel zu der Aufnahmerichtung erstreckten Spaltabschnitt des Spalts, senkrecht zu der Aufnahmerichtung 0,05 mm bis 0,4 mm, beispielsweise 0,3 mm. Insbesondere ist der Spalt nicht zur Aufnahme der männlichen Anschlusseinrichtung ausgebildet. Vorteilhaft lässt sich durch den Spalt ein zumindest weitgehend voneinander unabhängiges elastisches Federverhalten der inneren und der äußeren Federschenkelbereiche erreichen.

In weiterer Ausgestaltung der Erfindung sind eine Dicke des äußeren Kontaktkörpers und eine Dicke des inneren Kontaktkörpers betragsmäßig gleich oder verschieden. Die Dicke des äußeren Kontaktkörpers kann 0,5 mm bis 0,7 mm betragen. Insbesondere entspricht die Dicke des äußeren Kontaktkörpers betragsmäßig einem 1-Fachen bis 1,5-Fachen der Dicke des inneren Kontaktkörpers. Alternativ oder zusätzlich, insbesondere zu einer Spezifikation des Dickenverhältnisses der Kontaktkörper, überragen die äußeren Federschenkelbereiche die inneren Federschenkelbereiche, insbesondere von dem äußeren Rückenbereich und dem inneren Rückenbereich abgewandt, entgegen der Aufnahmerichtung.

Die Dicke des äußeren Kontaktkörpers und die Dicke des inneren Kontaktkörpers können insbesondere senkrecht zu einer Berührungsfläche zwischen den Kontaktkörpern gemessen sein. Eine Dicke des inneren Kontaktkörpers kann in unmittelbarer Verlängerung der Dicke des äußeren Kontaktkörpers gemessen sein. Insbesondere sind die Dicken der Kontaktkörper außerhalb der Kontaktkörperabschnitte und/oder in den Rückenbereichen parallel zu der Aufnahmerichtung gemessen. Der äußere Kontaktkörper und/oder der innere Kontaktkörper kann aus einem Blechmaterial hergestellt sein, wobei die jeweilige Dicke einer Blechstärke des Blechmaterials entspricht.

In weiterer Ausgestaltung der Erfindung weist der innere Kontaktkörper wenigstens einen Verbindungsbereich auf, der, insbesondere senkrecht zu der Aufnahmerichtung, in den inneren Rückenbereich übergeht. Der innere Kontaktkörper kann zwei Verbindungsbereiche aufweisen, zwischen welchen der innere Rückenbereich, insbesondere senkrecht zur Aufnahmerichtung, angeordnet ist. Der äußere Kontaktkörper weist wenigstens einen Verbindungsbereich auf, der, insbesondere senkrecht zur Aufnahmerichtung, in den äußeren Rückenbereich übergeht. Der äußere Kontaktkörper kann zwei Verbindungsbereiche aufweisen, zwischen welchen der äußere Rückenbereich, insbesondere senkrecht zu der Aufnahmerichtung, angeordnet ist. Der innere Kontaktkörper und der äußere Kontaktkörper sind, insbesondere ausschließlich, an ihren Verbindungsbereichen miteinander verbunden. Insbesondere sind der innere Kontaktkörper und der äußere Kontaktkörper an ihren Verbindungsbereichen stoffschlüssig und/oder formschlüssig miteinander verbunden. In dem jeweiligen Verbindungsbereich kann wenigstens eine lokale Verbindungszone für die stoffschlüssige und/oder formschlüssige Verbindung vorhanden sein. Mittels der stoff- und/oder formschlüssigen Verbindung der Verbindungsbereiche der Kontaktkörper können die Kontaktkörper aneinander befestigt sein. Insbesondere ist ausschließlich in der betreffenden Verbindungszone ein Stoffschluss, insbesondere durch eine Schweißverbindung, zwischen den Kontaktkörpern ausgebildet. Alternativ oder zusätzlich können die Kontaktkörper, insbesondere ausschließlich, an ihren Verbindungsbereichen formschlüssig miteinander verbunden sein, insbesondere mittels Clinchens.

Zweckmäßig sind die Rückenbereiche der Körperabschnitte entlang einer gemeinsamen Rückenlängserstreckungsrichtung, insbesondere senkrecht zu der Aufnahmerichtung, erstreckt. Entlang der Rückenlängserstreckungsrichtung können beidseits der Körperabschnitte jeweils Verbindungsabschnitte vorhanden sein. Insbesondere sind die Verbindungsabschnitte des äußeren Körperabschnitts und die Verbindungsabschnitte des inneren Körperabschnitts im Wesentlichen komplementär zueinander ausgebildet und/oder angeordnet. Alternativ oder zusätzlich ist es denkbar, dass der äußere Kontaktkörper als erster Kontaktkörperteil-Abschnitt eines materialeinheitlich zusammenhängenden Kontaktkörperteils und der innere Kontaktkörper als zweiter Kontaktkörperteil-Abschnitt desselben Kontaktkörperteils ausgebildet ist, wobei der zweite Kontaktkörperteil-Abschnitt auf den ersten Kontaktkörperteil-Abschnitt umgelegt ist. Ein aus einem derartigen Umlegen resultierender Biegefalz kann dabei in einem Verbindungsbereich außerhalb der Rückenbereiche angeordnet sein.

In weiterer Ausgestaltung der Erfindung ist wenigstens einer, insbesondere jeder, der inneren Federschenkelbereiche entlang der Aufnahmerichtung zumindest einmal wenigstens teilweise so geschlitzt, dass wenigstens zwei zueinander, insbesondere wenigstens im Wesentlichen, parallel erstreckte und individuell elastisch auslenkbare Federfingerabschnitte des betreffenden inneren Federschenkelbereichs ausgebildet sind. Zwischen zwei Federfingerabschnitten kann also ein Schlitz des betreffenden inneren Federschenkelbereichs vorhanden sein. Es versteht sich, dass mehrere Schlitze vorgesehen sein können, so dass mehrere senkrecht zu der Aufnahmerichtung in Reihe angeordnete Federfingerabschnitte des inneren Federschenkelbereichs ausgebildet sind. Alternativ oder zusätzlich ist wenigstens einer, insbesondere jeder, der äußeren Federschenkelbereiche entlang der Aufnahmerichtung zumindest einmal wenigstens teilweise so geschlitzt, dass wenigstens zwei zueinander, insbesondere wenigstens im Wesentlichen, parallel erstreckte und individuell elastisch auslenkbare Federfingerabschnitte des betreffenden äußeren Federschenkelbereichs ausgebildet sind. Zwischen zwei senkrecht zu der Aufnahmerichtung benachbarten Federschenkelabschnitten kann also ein Schlitz des betreffenden äußeren Federschenkelbereichs vorhanden sein. Es versteht sich, dass je äußerem Federschenkelbereich mehrere Schlitze vorgesehen sein können, so dass mehrere senkrecht zu der Aufnahmerichtung aufgereihte Federfingerabschnitte des äußeren Federschenkelbereichs ausgebildet werden. Die wenigstens teilweise geschlitzten Federschenkelbereiche mit Federfingerabschnitten können gabelförmig, insbesondere in der Art einer Besteckgabel, ausgebildet sein, wobei die Federfingerabschnitte gabelzinkenartig ausgebildet sind.

"Wenigstens teilweise geschlitzt" kann sich darauf beziehen, dass die Federschenkelbereiche in Aufnahmerichtung nicht vollständig bis zu dem jeweiligen Rückenbereich des zugehörigen Kontaktkörpers geschlitzt sind. Jeder Federschenkelbereich kann also zwischen dem zugehörigen Rückenbereich und seinen Federfingerabschnitten einen schlitzfreien Abschnitt aufweisen.

Zweckmäßig sind die Federfingerabschnitte lamellenförmig ausgebildet.

Zweckmäßig können die Federfingerabschnitte des äußeren Kontaktkörpers und des inneren Kontaktkörpers senkrecht zu der Aufnahmerichtung und senkrecht zu der Rückenlängserstreckungsrichtung der weiblichen Anschlusseinrichtung in einer gemeinsamen Flucht angeordnet sein. Alternativ kann es zweckmäßig sein, dass die Federfingerabschnitte des äußeren Kontaktkörpers bezüglich der Rückenlängserstreckungsrichtung, insbesondere auf Lücke, versetzt zu den Federfingerabschnitten des inneren Kontaktkörpers angeordnet sind.

Zweckmäßig sind drei Federfingerabschnitte je Federschenkelbereich vorhanden, d. h. der betreffende Federschenkelbereich ist zweimal wenigstens teilweise geschlitzt. Es versteht sich, dass auch eine andere Anzahl an Federfingerabschnitten je Federschenkelbereich zweckmäßig sein kann. Insbesondere ist es denkbar, dass die inneren Federschenkelbereiche die gleiche oder eine andere Anzahl an Federfingerabschnitten aufweisen als die äußeren Federschenkelbereiche.

In weiterer Ausgestaltung der Erfindung weist wenigstens ein, insbesondere jeder, Federfingerabschnitt wenigstens eines, insbesondere jedes, inneren Federschenkelbereichs ein freies Kontaktende zum elektrischen Kontaktieren der aufgenommenen männlichen Anschlusseinrichtung auf. Alternativ oder zusätzlich weist wenigstens ein, insbesondere jeder, Federfingerabschnitt wenigstens eines, insbesondere jedes, äußeren Federschenkelbereichs ein freies Kontaktende zum elektrischen Kontaktieren der aufgenommenen männlichen Anschlusseinrichtung auf. Das freie Kontaktende des jeweiligen Fingerabschnitts weist eine, insbesondere linsensegmentförmig, gewölbte Kontaktfläche zum elektrisch kontaktierenden, insbesondere tangentialen und/oder punktuellen, Anlegen an die aufgenommene männliche Anschlusseinrichtung auf. Vorteilhaft kann mittels derartig gewölbter Kontaktflächen die elektrische Kontaktierung der aufgenommenen männlichen Anschlusseinrichtung, insbesondere positions- und/oder erstreckungsbezogen, besonders präzise definiert werden. Unter Umständen können derart gewölbte Kontaktflächen besonders robust sein und/oder Steckkräfte beim Aufnehmen der männlichen Anschlusseinrichtung mittels der weiblichen Anschlusseinrichtung reduzieren.

Zweckmäßig kann die weibliche Anschlusseinrichtung ein Kontaktfett aufweisen, welches zumindest an den Kontaktflächen angebracht ist. Das Kontaktfett kann Steckkräfte reduzieren und/oder oxidationsmindernd wirken.

In weiterer Ausgestaltung der Erfindung sind der innere Rückenbereich und der äußere Rückenbereich entlang der Rückenlängserstreckungsrichtung der weiblichen Anschlusseinrichtung gemeinsam längserstreckt, wobei die Rückenlängserstreckungsrichtung senkrecht zu der Aufnahmerichtung verläuft. Der innere Rückenbereich weist wenigstens eine senkrecht zu der Rückenlängserstreckungsrichtung und senkrecht zu der Aufnahmerichtung verlaufende Sicke auf. Alternativ oder zusätzlich weist der äußere Rückenbereich wenigstens eine senkrecht zu der Rückenlängserstreckungsrichtung und senkrecht zu der Aufnahmerichtung verlaufende Sicke auf. Mittels einer derartigen Sicke lässt sich eine Steifigkeit des betreffenden Rückenbereichs verbessern, insbesondere hinsichtlich einer Biegebelastung, um eine parallel zu der Rückenlängserstreckungsrichtung verlaufende virtuelle Biegeachse.

In weiterer Ausgestaltung der Erfindung weist der äußere Körperabschnitt wenigstens eine Sicke auf, die von dem einen der äußeren Federschenkelbereiche über den äußeren Rückenbereich zu dem anderen der äußeren Federschenkelbereiche, insbesondere entlang einer im Wesentlichen C- und/oder U-förmigen Leitkurve, erstreckt ist. Insbesondere ist die Sicke des äußeren Körperabschnitts von dem einen der äußeren Federschenkelbereiche über den äußeren Rückenbereich zu dem anderen der äußeren Federschenkelbereiche bis in einen Federfingerabschnitt des jeweiligen äußeren Federschenkelbereichs erstreckt. Alternativ oder zusätzlich ist wenigstens einer, insbesondere jeder, der inneren Federschenkelbereiche sickenfrei.

Unter Umständen ist es aber denkbar, dass auch der innere Körperabschnitt wenigstens eine Sicke aufweist, die von dem einen der inneren Federschenkelbereiche über den inneren Rückenbereich zu dem anderen der inneren Federschenkelbereiche erstreckt ist, insbesondere bis in einen Federfingerabschnitt des jeweiligen inneren Federschenkelbereichs.

Ein erfindungsgemäßes Batteriesystem weist einen elektrischen Batteriepack, insbesondere einen elektrischen Akkupack, zum Speichern elektrischer Energie auf. Zudem weist das Batteriesystem ein elektrisches Batteriegerät auf, welches mit dem Batteriepack lösbar elektrisch verbindbar ist. Dabei weisen der Batteriepack und das Batteriegerät komplementäre elektrische Anschlusseinrichtungen auf, von welchen wenigstens eine als weibliche Anschlusseinrichtung nach einem der vorhergehenden Ansprüche und wenigstens eine andere als männliche Anschlusseinrichtung ausgebildet ist. Die vorstehend erläuterten Vorteile der erfindungsgemäßen weiblichen Anschlusseinrichtung übertragen sich somit auch auf das erfindungsgemäße Batteriesystem.

Ein erfindungsgemäßer elektrischer Batteriepack für ein, insbesondere erfindungsgemäßes, elektrisches Batteriesystem weist wenigstens eine erfindungsgemäße weibliche Anschlusseinrichtung wie voranstehend beschrieben auf. Insofern übertragen sich die Vorteile der erfindungsgemäßen weiblichen Anschlusseinrichtung auch auf den erfindungsgemäßen elektrischen Batteriepack mit einer derartigen weiblichen Anschlusseinrichtung. Der Batteriepack weist insbesondere eine Mehrzahl elektrischer Batteriezellen zum Speichern elektrischer Energie auf.

Ein erfindungsgemäßes elektrisches Batteriegerät für ein, insbesondere erfindungsgemäßes, elektrisches Batteriesystem weist wenigstens eine erfindungsgemäße weibliche Anschlusseinrichtung wie voranstehend beschrieben auf. Insofern übertragen sich die vorstehend erläuterten Vorteile der erfindungsgemäßen weiblichen Anschlusseinrichtung auch auf das erfindungsgemäße elektrische Batteriegerät mit einer derartigen weiblichen Anschlusseinrichtung. Das elektrische Batteriegerät kann ein Elektro-Bearbeitungsgerät, insbesondere ein handgeführtes und/oder handführbares Elektro-Bearbeitungsgerät, sein. Das Elektro-Bearbeitungsgerät kann einen mittels elektrischer Energie aus einem elektrischen Batteriepack antreibbaren Elektromotor aufweisen. Mittels des Elektromotors kann eine mit dem Elektro-Bearbeitungsgerät verbindbare oder verbundene Werkzeugeinrichtung angetrieben werden, um ein Werkstück zu Bearbeiten. Alternativ oder zusätzlich kann das elektrische Batteriegerät ein Batterie-Ladegerät zum Aufladen eines elektrischen Batteriepacks mit elektrischer Energie sein. Es ist denkbar, dass sowohl das Batterieladegerät als auch das Elektro-Bearbeitungsgerät von einem kombinierten Batteriegerät aufgewiesen sind.

Weitere Vorteile und Merkmale der Erfindung ergeben sich aus den Ansprüchen sowie aus der nachfolgenden Beschreibung eines bevorzugten Ausführungsbeispiels der Erfindung, welches anhand der Zeichnungen dargestellt ist. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Fig. 1: zeigt in schematischer Perspektivdarstellung eine Ausführungsform einer erfindungsgemäßen weiblichen Anschlusseinrichtung,
- Fig. 2: in schematischer Vorderansicht die weibliche Anschlusseinrichtung nach Fig. 1,
- Fig. 3: in schematischer Schnittdarstellung die weibliche Anschlusseinrichtung nach den Fig. 1 und 2,
- Fig. 4: in schematischer Perspektivdarstellung eine Ausführungsform eines erfindungsgemäßen elektrischen Batteriepacks, und
- Fig. 5: eine Ausführungsform eines erfindungsgemäßen elektrischen Batteriegeräts.

Eine weibliche Anschlusseinrichtung 1 ist für ein elektrisches Batteriesystem 50 vorgesehen. Vorliegend wird die weibliche Anschlusseinrichtung 1 in dem elektrischen Batteriesystem 50 verwendet. Die weibliche Anschlusseinrichtung 1 ist dabei zum Aufnehmen einer männlichen Anschlusseinrichtung 51 des Batteriesystems 50 in einer Aufnahmerichtung A der weiblichen Anschlusseinrichtung 1 ausgebildet. Einhergehend mit dem Aufnehmen der männlichen Anschlusseinrichtung 51 wird die weibliche Anschlusseinrichtung 51 lösbar elektrisch mit der männlichen Anschlusseinrichtung 51 verbunden. Wenn die männliche Anschlusseinrichtung 51 mittels der weiblichen Anschlusseinrichtung 1 aufgenommen ist, ist also eine lösbare elektrische Verbindung zwischen der weiblichen Anschlusseinrichtung 1 und der männlichen Anschlusseinrichtung 51 erzeugt. Die männliche Anschlusseinrichtung 51 ist vorliegend nicht von der weiblichen Anschlusseinrichtung 1 aufnehmbar, ohne dass die männliche Anschlusseinrichtung 51 und die weibliche Anschlusseinrichtung 1 elektrisch miteinander verbunden werden.

Das Batteriesystem 50 weist einen elektrischen Batteriepack 60 zum Speichern elektrischer Energie auf. Zudem weist das Batteriesystem 50 ein elektrisches Batteriegerät 70 auf, welches mit dem Batteriepack 60 lösbar elektrisch verbindbar ist. Der Batteriepack 60 und das Batteriegerät 70 haben komplementäre elektrische Anschlusseinrichtungen 1, 51. Von den komplementären Anschlusseinrichtungen 1, 51 des Batteriepacks 60 und des Batteriegeräts 70 ist wenigstens eine als weibliche Anschlusseinrichtung 1 und wenigstens eine andere als männliche Anschlusseinrichtung 51 ausgebildet. Entweder der Batteriepack 60 oder das Batteriegerät 70 haben also wenigstens eine weibliche Anschlusseinrichtung 1, wohingegen das jeweils andere aus dem Batteriepack 60 und dem Batteriegerät 70 wenigstens eine männliche Anschlusseinrichtung 51 aufweist.

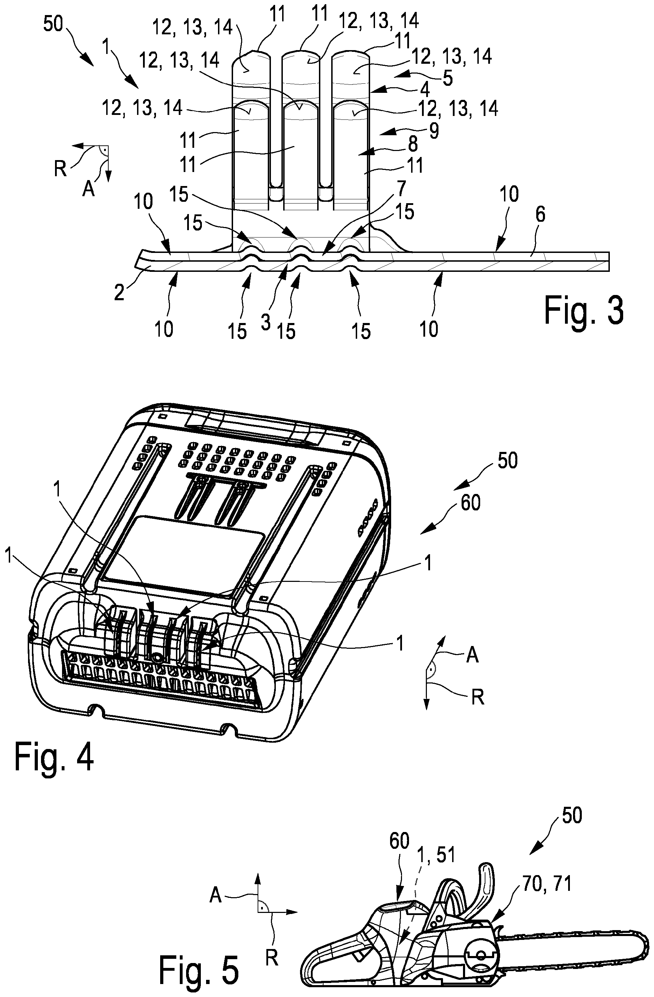

Vorliegend hat der elektrische Batteriepack 60 wenigstens eine weibliche Anschlusseinrichtung 1. Alternativ oder zusätzlich hat das elektrische Batteriegerät 70 wenigstens eine weibliche Anschlusseinrichtung 1. Das elektrische Batteriegerät kann als Elektro-Bearbeitungsgerät 71 und/oder als Batterie-Ladegerät ausgebildet sein. Im Beispiel der Fig. 5 ist das elektrische Batteriegerät 70 als Elektro-Bearbeitungsgerät 71 als Motorkettensäge ausgebildet.

Die weibliche Anschlusseinrichtung 1 weist einen äußeren Kontaktkörper 2 sowie einen inneren Kontaktkörper 6 auf.

Der äußere Kontaktkörper 2 hat einen äußeren Rückenbereich 3 sowie zwei äußere Federschenkelbereiche 4. Die äußeren Federschenkelbereiche 4 stehen einander gegenüberliegend von dem äußeren Rückenbereich 3 ab. Vorliegend stehen die äußeren Federschenkelbereiche 4 beide entgegen der Aufnahmerichtung A von dem äußeren Rückenbereich 3 ab. Die äußeren Federschenkelbereiche 4 sind dazu ausgebildet, die aufgenommene männliche Anschlusseinrichtung 51 im Abstand zu dem äußeren Rückenbereich 3 elektrisch zu kontaktieren. Insbesondere kontaktiert die aufgenommene männliche Anschlusseinrichtung 51 den äußeren Kontaktkörper 2 ausschließlich im Abstand zu dem äußeren Rückenbereich 3 an den äußeren Federschenkelbereichen 4. Der äußere Rückenbereich 3 und die beiden äußeren Federschenkelbereiche 4 bilden gemeinsam einen äußeren Körperabschnitt 5 des äußeren Kontaktkörpers 2 aus.

Der innere Kontaktkörper 6 hat einen inneren Rückenbereich 7 und zwei einander gegenüberliegend von dem inneren Rückenbereich 7 abstehende innere Federschenkelbereiche 8. Die inneren Federschenkelbereiche 8 stehen vorliegend beide entgegen der Aufnahmerichtung A von dem inneren Rückenbereich 7 ab. Die inneren Federschenkelbereiche 8 sind dazu ausgebildet, die aufgenommene männliche Anschlusseinrichtung 51 in Abstand zu dem inneren Rückenbereich 7 elektrisch zu kontaktieren. Insbesondere kontaktiert die aufgenommene männliche Anschlusseinrichtung 51 den inneren Kontaktkörper 6 ausschließlich im Abstand zu dem inneren Rückenbereich 7 an den inneren Federschenkelbereichen 8. Der innere Rückenbereich 7 und die beiden inneren Federschenkelbereiche 8 bilden gemeinsam einen inneren Körperabschnitt 9 des inneren Kontaktkörpers 6 aus.

Der äußere Körperabschnitt 5 und der innere Körperabschnitt 9 sind geschachtelt angeordnet. Vorliegend sind der äußere Körperabschnitt 5 und der innere Körperabschnitt 9 so geschachtelt angeordnet, dass die Körperabschnitte 5, 9 ausschließlich an dem inneren Rückenbereich 7 und an dem äußeren Rückenbereich 3 aneinander angelegt sind.

Alternativ zu der gezeigten Ausführungsform können der äußere Körperabschnitt 5 und der innere Körperabschnitt 9 derart geschachtelt angeordnet sein, dass sie einander nicht berühren. Zwischen den Körperabschnitten 5, 9 kann also ein Abstand vorhanden sein, insbesondere zwischen ihren Rückenbereichen 3, 7. Eine elektrische Verbindung zwischen dem äußeren Kontaktkörper 2 und dem inneren Kontaktkörper 6 kann dann nur außerhalb der Körperabschnitte 5, 9 vorhanden sein.

Der innere Kontaktkörper 6 sowie der äußere Kontaktkörper 2 können ein Kontaktkörpermaterial aufweisen oder aus einem solchen Kontaktkörpermaterial bestehen. Das Kontaktkörpermaterial ist vorliegend eine Kupferlegierung. Die Kupferlegierung kann wenigstens 99 Masse-% Cu aufweisen. Beispielsweise kann es sich bei der Kupferlegierung um CuSn6 handeln. Alternativ oder zusätzlich kann das Kontaktkörpermaterial mit einer Beschichtung versehen sein. Die Beschichtung kann Zinn aufweisen oder aus Zinn bestehen. Die Beschichtung kann Zinnsilber aufweisen oder aus Zinnsilber bestehen.

Einer der inneren Federschenkelbereiche 8 definiert vorliegend gemeinsam mit einem der äußeren Federschenkelbereiche 4 je einen Spalt S der weiblichen Anschlusseinrichtung 1. Vorliegend sind zwei derartige Spalte S vorhanden, welche den inneren Körperabschnitt 9 außenseitig flankieren und welche wiederum selbst außenseitig von den äußeren Federschenkelbereichen 4 des äußeren Kontaktkörpers 2 flankiert sind. Vorliegend misst jeder Spalt S senkrecht zu der Aufnahmerichtung A, beispielsweise wenigstens in einem parallel zu der Aufnahmerichtung A erstreckten Spaltabschnitt des jeweiligen Spalts S, 0,05 mm bis 0,4 mm, beispielsweise 0,3 mm.

Der jeweilige Spalt S ist vorliegend nicht zur Aufnahme der männlichen Anschlusseinrichtung 51 ausgebildet. Im aufgenommenen Zustand ragt die männliche Anschlusseinrichtung 51 vorliegend in einen Zwischenraum zwischen den inneren Federschenkelbereichen 8, so dass die aufgenommene männliche Anschlusseinrichtung 51 mittels des inneren Körperabschnitts 9 umgriffen ist, wobei der die männliche Anschlusseinrichtung 51 umgreifende innere Körperabschnitt 9 wiederum gemeinsam mit der umgriffenen männlichen Anschlusseinrichtung 51 von dem äußeren Körperabschnitt 5 umgriffen ist. Der Zwischenraum ist vorliegend verschieden von den Spalten S.

Der äußere Kontaktkörper 2 weist vorliegend eine Dicke D1 auf. Der innere Kontaktkörper 6 weist beispielsweise eine Dicke D2 auf. Die Dicken D1, D2 des inneren Kontaktkörpers 6 und des äußeren Kontaktkörpers 2 können betragsmäßig gleich oder - wie vorliegend - verschieden sein. Die Dicke D1 des äußeren Kontaktkörpers 2 kann beispielsweise 0,5 mm bis 0,7 mm betragen. Die Dicke D1 des äußeren Kontaktkörpers 2 kann einem 1-Fachen bis 1,5-Fachen der Dicke D2 des inneren Kontaktkörpers 6 entsprechen.

Vorliegend überragen die äußeren Federschenkelbereiche 4 die inneren Federschenkelbereiche 8 entgegen der Aufnahmerichtung A. Dabei stehen die äußeren Federschenkelbereiche 4 - vorliegend von dem äußeren Rückenbereich 3 und dem inneren Rückenbereich 7 abgewandt - entgegen der Aufnahmerichtung A über die inneren Federschenkelbereiche 8 hinaus. Entlang der Aufnahmerichtung A gemessen können die äußeren Federschenkelbereiche 4 entsprechend länger erstreckt sein als die inneren Federschenkelbereiche 8.

Die Dicke D1 des äußeren Kontaktkörpers 2 ist vorliegend senkrecht zu einer Berührungsebene zwischen den Kontaktkörpern 2, 6 gemessen. Die Dicke D2 des inneren Kontaktkörpers 6 ist beispielsweise in unmittelbarer Verlängerung der Dicke D1 des äußeren Kontaktkörpers 2 gemessen. Insbesondere entspricht die Dicke D1 des äußeren Kontaktkörpers 2 und/oder die Dicke D2 des inneren Kontaktkörpers 6 einer Blechstärke eines Blechmaterials, aus welchem der betreffende Kontaktkörper 2, 6, insbesondere umformend, hergestellt ist.

Der innere Kontaktkörper 6 weist beispielsweise wenigstens einen in den inneren Rückenbereich 7 übergehenden Verbindungsbereich 10 auf. Der äußere Kontaktkörper 2 weist beispielsweise wenigstens einen in den äußeren Rückenbereich 3 übergehenden Verbindungsbereich 10 auf. In den Verbindungsbereichen 10 können der innere Kontaktkörper 6 und/oder der äußere Kontaktkörper 2 im Wesentlichen eine Blechstärke aufweisen, die der jeweiligen Dicke D1, D2 des betreffenden Kontaktkörpers 2, 6 entspricht. Insbesondere sind die Verbindungsbereiche 10 im Wesentlichen flächig und/oder eben erstreckt, beispielsweise senkrecht zur Aufnahmerichtung A.

Der innere Kontaktkörper 6 und der äußere Kontaktkörper 2 sind beispielsweise an ihren Verbindungsbereichen 10 miteinander verbunden, insbesondere aneinander befestigt. Vorliegend sind der innere Kontaktkörper 6 und der äußere Kontaktkörper 2 ausschließlich an den aneinander angelegten Verbindungsbereichen 10 miteinander verbunden, insbesondere um den inneren Kontaktkörper 6 und den äußeren Kontaktkörper 2 außerhalb der Körperabschnitte 5, 9 aneinander zu befestigen. Die Kontaktkörper 2, 6 können an ihren Verbindungsbereichen 10 formschlüssig und/oder stoffschlüssig miteinander verbunden sein. Vorliegend sind die beiden Kontaktkörper 2, 6 stoffschlüssig an ihren Verbindungsbereichen 10 miteinander verbunden.

In dem jeweiligen Verbindungsbereich 10 kann wenigstens eine lokale Verbindungszone Z für die stoffschlüssige Verbindung vorhanden sein. Dabei ist vorliegend ausschließlich in der betreffenden Verbindungszone Z ein Stoffschluss, beispielsweise durch eine Schweißverbindung, zwischen den Kontaktkörpern 2, 6 ausgebildet. Alternativ oder zusätzlich können die Kontaktkörper 2, 6, beispielsweise ausschließlich, an ihren Verbindungsbereichen 10 formschlüssig miteinander verbunden sein, insbesondere mittels Clinchens.

Vorliegend sind entlang einer Rückenlängserstreckungsrichtung R der weiblichen Anschlusseinrichtung 1 beidseits der Körperabschnitte 5, 9 Verbindungsabschnitte 10 vorhanden. Jeder Kontaktkörper 2, 6 weist also vorliegend zwei Verbindungsbereiche 10 auf, zwischen welchen der Körperabschnitt 5, 9 des betreffenden Kontaktkörpers 2, 6 angeordnet ist. Alternativ oder zusätzlich ist es denkbar, dass der äußere Kontaktkörper 2 als erster Kontaktkörperteil-Abschnitt eines materialeinheitlich zusammenhängenden Kontaktkörperteils und der innere Kontaktkörper 6 als zweiter Kontaktkörperteil-Abschnitt desselben Kontaktkörperteils ausgebildet ist, wobei der zweite Kontaktkörperteil-Abschnitt auf den ersten Kontaktkörperteil-Abschnitt umgelegt ist. Ein aus einem derartigen Umlegen resultierender Biegefalz kann dabei in einem Verbindungsbereich 10 außerhalb der Rückenbereiche 3, 7 angeordnet sein. Das Kontaktkörperteil kann ein einziges materialeinheitliches Blechteil sein.

Beispielsweise ist wenigstens einer, vorliegend jeder, der inneren Federschenkelbereiche 8 entlang der Aufnahmerichtung A zumindest einmal wenigstens teilweise - vorliegend nur teilweise - geschlitzt, so dass wenigstens zwei Federfingerabschnitte 11 des betreffenden inneren Federschenkelbereichs 8 ausgebildet sind. Die Federfingerabschnitte 11 des inneren Federschenkelbereichs 8 sind beispielsweise im Wesentlichen parallel zueinander erstreckt. Die Federfingerabschnitte 11 des inneren Federschenkelbereichs 8 sind vorliegend individuell elastisch auslenkbar.

Alternativ oder zusätzlich ist beispielsweise wenigstens einer, vorliegend jeder, der äußeren Federschenkelbereiche 4 entlang der Aufnahmerichtung A zumindest einmal wenigstens teilweise - vorliegend ausschließlich teilweise - geschlitzt, so dass wenigstens zwei Federfingerabschnitte 11 des betreffenden äußeren Federschenkelbereichs 4 ausgebildet sind. Die Federfingerabschnitte 11 des betreffenden äußeren Federschenkelbereichs 4 sind beispielsweise im Wesentlichen parallel zueinander erstreckt. Die Federfingerabschnitte 11 des betreffenden äußeren Federschenkelbereichs 4 sind individuell elastisch auslenkbar.

Die Federfingerabschnitte 11 des äußeren Kontaktkörpers 2 und die Federfingerabschnitte 11 des inneren Kontaktkörpers 6 können wie vorliegend senkrecht zu der Aufnahmerichtung A und senkrecht zu der Rückenlängserstreckungsrichtung R der weiblichen Anschlusseinrichtung 1 in einer gemeinsamen Flucht angeordnet sein. Alternativ ist es denkbar, dass die Federfingerabschnitte 11 des äußeren Kontaktkörpers 2 bezüglich der Rückenlängserstreckungsrichtung R versetzt zu den Federfingerabschnitten 11 des inneren Kontaktkörpers 6 angeordnet sind, beispielsweise auf Lücke.

Vorliegend sind drei Federfingerabschnitte 11 je Federschenkelbereich 4, 8 vorhanden, d. h. der betreffende Federschenkelbereich 4, 8 ist zweimal wenigstens, vorliegend nur, teilweise geschlitzt. Die Federschenkelbereiche 4, 8 weisen vorliegend jeweils einen ungeschlitzten Abschnitt auf, der entlang der Aufnahmerichtung A die jeweiligen Federfingerabschnitte 11 mit den zugehörigen Rückenbereichen 3, 7 verbindet. Der jeweilige ungeschlitzte Abschnitt kann im Wesentlichen parallel zu der Aufnahmerichtung A erstreckt sein.

Die Federfingerabschnitte 11 können winklig zu der Aufnahmerichtung A erstreckt sein. Einander senkrecht zu der Aufnahmerichtung A und senkrecht zu der Rückenlängserstreckungsrichtung R gegenüberliegende Federfingerabschnitte 11 des äußeren Kontaktkörpers 2 laufen vorliegend, insbesondere paarweise, entgegen der Aufnahmerichtung A aufeinander zu. Einander senkrecht zu der Aufnahmerichtung A und senkrecht zu der Rückenlängserstreckungsrichtung R gegenüberliegende Federfingerabschnitte 11 des inneren Kontaktkörpers 6 laufen vorliegend, insbesondere paarweise, entgegen der Aufnahmerichtung A aufeinander zu.

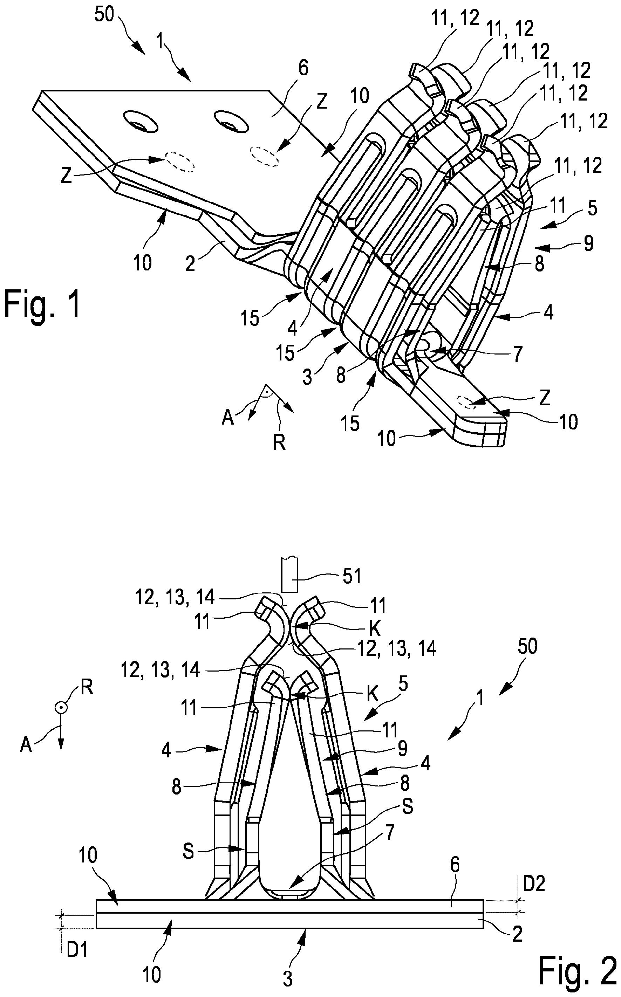

Jeder Federfingerabschnitt 11 weist vorliegend ein freies Kontaktende 12 zum elektrischen Kontaktieren der aufgenommenen männlichen Anschlusseinrichtung 51 auf. Dabei können einander senkrecht zu der Aufnahmerichtung A und senkrecht zu der Rückenlängserstreckungsrichtung R gegenüberliegende Federfingerabschnitte 11 des äußeren Kontaktkörpers 2 einander berühren, wenn die männliche Anschlusseinrichtung 51 nicht aufgenommen ist, vgl. beispielsweise Fig. 2.

Die freien Kontaktenden 12 einander senkrecht zu der Aufnahmerichtung A und senkrecht zu der Rückenlängserstreckungsrichtung R gegenüberliegender Federfingerabschnitte 11 des inneren Kontaktkörpers 6 können einander, insbesondere paarweise, berühren, wenn die männliche Anschlusseinrichtung 51 nicht aufgenommen ist.

Wenn die männliche Anschlusseinrichtung 51 nicht aufgenommen ist, kann der äußere Körperabschnitt 5 den inneren Körperabschnitt 9 entlang der Rückenlängserstreckungsrichtung R betrachtet vollständig umgreifen.

Die Körperabschnitte 5, 9 können spiegelsymmetrisch ausgebildet und/oder angeordnet sein, insbesondere bezüglich einer entlang der Aufnahmerichtung A und die Rückenlängserstreckungsrichtung R aufgespannten Symmetrieebene der weiblichen Anschlusseinrichtung 1.

Das freie Kontaktende 12 eines jeweiligen Federfingerabschnitts 11 weist beispielsweise eine gewölbte Kontaktfläche 13 auf, die zum elektrisch kontaktierenden, beispielsweise punktuellen, Anlegen an die aufgenommene männliche Anschlusseinrichtung 51 ausgebildet ist.

Die Federfingerabschnitte 11 können lamellenförmig und/oder gabelzinkenförmig ausgebildet sein.

Die weibliche Anschlusseinrichtung 1 kann ein Kontaktfett 14 aufweisen, welches zumindest an den Kontaktflächen 13 angebracht ist. Das Kontaktfett 14 kann eine oxidationsmindernde Wirkung für das Kontaktkörpermaterial des jeweiligen Kontaktkörpers 2, 6 aufweisen. Zudem kann das Kontaktfett 14 eine reibungsmindernde Wirkung aufweisen, um Steckkräfte beim Aufnehmen der männlichen Anschlusseinrichtung 51 mittels der weiblichen Anschlusseinrichtung 1 zu reduzieren.

Der innere Rückenbereich 7 und der äußere Rückenbereich 3 sind vorliegend gemeinsam entlang der Rückenlängserstreckungsrichtung R längserstreckt. Die Rückenlängserstreckungsrichtung R verläuft senkrecht zu der Aufnahmerichtung A. Der innere Rückenbereich 7 weist beispielsweise wenigstens eine senkrecht zu der Rückenlängserstreckungsrichtung R und senkrecht zu der Aufnahmerichtung A verlaufende Sicke 15 auf. Alternativ oder zusätzlich kann der äußere Rückenbereich 3 - wie vorliegend - wenigstens eine senkrecht zu der Rückenlängserstreckungsrichtung R und senkrecht zu der Aufnahmerichtung A verlaufende Sicke 15 aufweisen.

Vorliegend weist der äußere Körperabschnitt 5 wenigstens eine Sicke 15 auf, die von dem einen der äußeren Federschenkelbereiche 4 über den äußeren Rückenbereich 3 zu dem anderen der äußeren Federschenkelbereiche 4 verläuft. Vorliegend vorläuft die Sicke 15 des äußeren Körperabschnitts 5 jeweils bis in einen Federfingerabschnitt 11 des jeweiligen äußeren Federschenkelbereichs 4.

Beispielsweise ist wenigstens einer, vorliegend jeder, der inneren Federschenkelbereiche 8 sickenfrei ausgebildet. Bei alternativen, nicht gezeigten Ausführungsformen kann der innere Körperabschnitt 9 wenigstens eine Sicke 15 aufweisen, die von dem einen der inneren Federschenkelbereiche 8 über den inneren Rückenbereich 7 zu dem anderen der inneren Federschenkelbereiche 8 erstreckt ist, insbesondere bis in einen Federfingerabschnitt 11 des jeweiligen inneren Federschenkelbereichs 8 hinein.

Eine jeweilige in einen Federfingerabschnitt 11 hineinragende Sicke 15 kann entlang der Aufnahmerichtung A im Abstand zu dem freien Kontaktende 12 des betreffenden Federfingerabschnitts 11 enden.

## Patentansprüche

1. Weibliche Anschlusseinrichtung (1) für ein elektrisches Batteriesystem (50), wobei die weibliche Anschlusseinrichtung (1) zum lösbaren und elektrisch verbindenden Aufnehmen einer männlichen Anschlusseinrichtung (51) des Batteriesystems (50) in einer Aufnahmerichtung (A) der weiblichen Anschlusseinrichtung (1) ausgebildet ist, wobei die weibliche Anschlusseinrichtung (1) aufweist:
- einen äußeren Kontaktkörper (2), der einen äußeren Rückenbereich (3) und zwei einander gegenüberliegend von dem äußeren Rückenbereich (3) abstehende äußere Federschenkelbereiche (4) aufweist, wobei die äußeren Federschenkelbereiche (4) dazu ausgebildet sind, die aufgenommene männliche Anschlusseinrichtung (51) im Abstand zu dem äußeren Rückenbereich (3) elektrisch zu kontaktieren, wobei der äußere Rückenbereich (3) und die beiden äußeren Federschenkelbereiche (4) gemeinsam einen äußeren Körperabschnitt (5) des äußeren Kontaktkörpers (2) ausbilden, und
- einen inneren Kontaktkörper (6), der einen inneren Rückenbereich (7) und zwei einander gegenüberliegend von dem inneren Rückenbereich (7) abstehende innere Federschenkelbereiche (8) aufweist, wobei die inneren Federschenkelbereiche (8) dazu ausgebildet sind, die aufgenommene männliche Anschlusseinrichtung (51) im Abstand zu dem inneren Rückenbereich (7) elektrisch zu kontaktieren, wobei der innere Rückenbereich (7) und die beiden inneren Federschenkelbereiche (8) gemeinsam einen inneren Körperabschnitt (9) des inneren Kontaktkörpers (6) ausbilden,
- wobei der äußere Körperabschnitt (5) und der innere Körperabschnitt (9) derart geschachtelt angeordnet sind, dass sie nicht oder dass sie nur an dem inneren Rückenbereich (7) und an dem äußeren Rückenbereich (3) aneinander angelegt sind.

2. Weibliche Anschlusseinrichtung (1) nach dem vorhergehenden Anspruch,
- wobei einer der inneren Federschenkelbereiche (8) gemeinsam mit einem der äußeren Federschenkelbereiche (4) je einen Spalt (S) der weiblichen Anschlusseinrichtung (1) definiert,
- insbesondere wobei jeder Spalt (S) senkrecht zu der Aufnahmerichtung (A), insbesondere wenigstens in einem parallel zu der Aufnahmerichtung (A) erstreckten Spaltabschnitt des Spalts (S), 0,05 mm bis 0, 4 mm, insbesondere 0,3 mm, misst.

3. Weibliche Anschlusseinrichtung (1) nach einem der vorhergehenden Ansprüche,
- wobei eine, insbesondere 0,5 mm bis 0,7 mm betragende, Dicke (D1) des äußere Kontaktkörpers (2) und eine Dicke D2 des inneren Kontaktkörpers (6) betragsmäßig gleich oder verschieden sind, insbesondere wobei die Dicke (D1) des äußeren Kontaktkörpers (2) betragsmäßig einem 1-Fachen bis 1,5 Fachen der Dicke (D2) des inneren Kontaktkörpers (6) entspricht; und/oder
- wobei die äußeren Federschenkelbereiche (4) die inneren Federschenkelbereiche (8), insbesondere dem äußeren Rückenbereich (3) und dem inneren Rückenbereich (7) abgewandt, entgegen der Aufnahmerichtung (A) überragen.

4. Weibliche Anschlusseinrichtung (1) nach einem der vorhergehenden Ansprüche,
- wobei der innere Kontaktkörper (6) wenigstens einen in den inneren Rückenbereich (7) übergehenden Verbindungsbereich (10) aufweist,
- wobei der äußere Kontaktkörper (2) wenigstens einen in den äußeren Rückenbereich (3) übergehenden Verbindungsbereich (10) aufweist,
- wobei der innere Kontaktkörper (6) und der äußere Kontaktkörper (2), insbesondere ausschließlich, an ihren Verbindungsbereichen (10), insbesondere formschlüssig und/oder stoffschlüssig, miteinander verbunden sind.

5. Weibliche Anschlusseinrichtung (1) nach einem der vorhergehenden Ansprüche,
- wobei wenigstens einer, insbesondere jeder, der inneren Federschenkelbereiche (8) entlang der Aufnahmerichtung (A) zumindest einmal wenigstens teilweise geschlitzt ist, um wenigstens zwei zueinander, insbesondere wenigstens im Wesentlichen, parallel erstreckte und individuell elastisch auslenkbare Federfingerabschnitte (11) des betreffenden inneren Federschenkelbereichs (8) auszubilden, und/oder
- wobei wenigstens einer, insbesondere jeder, der äußeren Federschenkelbereiche (4) entlang der Aufnahmerichtung (A) zumindest einmal wenigstens teilweise geschlitzt ist, um wenigstens zwei zueinander, insbesondere wenigstens im Wesentlichen, parallel erstreckte und individuell elastisch auslenkbare Federfingerabschnitte (11) des betreffenden äußeren Federschenkelbereichs (4) auszubilden.

6. Weibliche Anschlusseinrichtung (1) nach einem der vorhergehenden Ansprüche,
- wobei wenigstens ein, insbesondere jeder, Federfingerabschnitt (11) wenigstens eines, insbesondere jedes, inneren Federschenkelbereichs (8) und/oder wenigstens ein, insbesondere jeder, Fingerfederabschnitt (11) wenigstens eines, insbesondere jedes, äußeren Federschenkelbereichs (4) ein freies Kontaktende (12) zum elektrischen Kontaktieren der aufgenommenen männlichen Anschlusseinrichtung (51) aufweist,
- wobei das freie Kontaktende (12) eine, insbesondere linsensegmentförmig, gewölbte Kontaktfläche (13) zum elektrisch kontaktierenden, insbesondere punktuellen, Anlegen an die aufgenommene männliche Anschlusseinrichtung (51) aufweist.

7. Weibliche Anschlusseinrichtung (1) nach einem der vorhergehenden Ansprüche,
- wobei der innere Rückenbereich (7) und der äußere Rückenbereich (3) entlang einer Rückenlängserstreckungsrichtung (R) der weiblichen Anschlusseinrichtung (1) gemeinsam längserstreckt sind, wobei die Rückenlängserstreckungsrichtung (R) senkrecht zu der Aufnahmerichtung (A) verläuft,
- wobei der innere Rückenbereich (7) und/oder der äußere Rückenbereich (3) wenigstens eine senkrecht zu der Rückenlängserstreckungsrichtung (R) und senkrecht zu der Aufnahmerichtung (A) verlaufende Sicke (15) aufweisen.

8. Weibliche Anschlusseinrichtung (1) nach einem der vorhergehenden Ansprüche,
- wobei der äußere Körperabschnitt (5) wenigstens eine Sicke (15) aufweist, die von dem einen der äußeren Federschenkelbereiche (4) über den äußeren Rückenbereich (3) zu dem anderen der äußeren Federschenkelbereiche (4) erstreckt ist, insbesondere bis in einen Federfingerabschnitt (11) des jeweiligen äußeren Federschenkelbereichs (4), und/oder
- wobei wenigstens einer, insbesondere jeder, der inneren Federschenkelbereiche (8) sickenfrei ist.

9. Batteriesystem (50), aufweisend
- einen elektrischen Batteriepack (60) zum Speichern elektrischer Energie und ein elektrisches Batteriegerät (70), welches mit dem Batteriepack (60) lösbar elektrisch verbindbar ist,
- wobei der Batteriepack (60) und das Batteriegerät (70) komplementäre Anschlusseinrichtungen (1, 51) aufweisen, von welchen wenigstens eine als weibliche Anschlusseinrichtung (1) nach einem der vorhergehenden Ansprüche und wenigstens eine andere als männliche Anschlusseinrichtung (51) ausgebildet ist.

10. Elektrischer Batteriepack (60) für ein elektrisches Batteriesystem (50), insbesondere nach dem vorhergehenden Anspruch, wobei der elektrische Batteriepack (60) wenigstens eine weibliche Anschlusseinrichtung (1) nach einem der Ansprüche 1 bis 8 aufweist.

11. Elektrisches Batteriegerät (70), insbesondere Elektro-Bearbeitungsgerät (71) und/oder Batterie-Ladegerät, für ein elektrisches Batteriesystem (50), insbesondere nach Anspruch 9, wobei das elektrische Batteriegerät (70) wenigstens eine weibliche Anschlusseinrichtung (1) nach einem der Ansprüche 1 bis 8 aufweist.
